# EUROPÄISCHE PATENTSCHRIFT

(11) **EP 2 188 353 B1**
(45) Veröffentlichungstag und Bekanntmachung des Hinweises auf die Patenterteilung: **28.10.2015**
(21) Anmeldenummer: 08804516.6
(22) Anmeldetag: 22.09.2008
(51) Int. Cl.: C10J 3/48, C10J 3/76

(54) **FLUGSTROMVERGASER MIT KÜHLSCHIRM UND WELLROHRKOMPENSATOR**
FLOW GASIFIER HAVING COOLING SHIELD AND BELLOWS EXPANSION JOINT
RÉACTEUR DE GAZÉIFICATION À LIT ENTRAÎNÉ MUNI D'UNE CHEMISE D'EAU ET D'UN COMPENSATEUR POUR TUBES ONDULÉS

(30) Priorität: 21.09.2007 DE 102007045321
(43) Veröffentlichungstag der Anmeldung: 26.05.2010
(73) Patentinhaber: Siemens Aktiengesellschaft, 80333 München (DE)
(72) Erfinder: SCHINGNITZ, Manfred, 09599 Freiberg (DE); KIRCHHÜBEL, Volker, 09599 Freiberg (DE); TOTH, Heidrun, 09599 Freiberg (DE)
(86) Internationale Anmeldenummer: PCT/EP2008/062589
(87) Internationale Veröffentlichungsnummer: WO 2009/040323

(56) Entgegenhaltungen:
- EP-A- 0 092 192
- EP-A- 0 254 830
- DE-A1-102005 041 931
- US-A- 4 202 672
- US-A- 4 395 268

## Beschreibung

Die Erfindung betrifft einen Reaktor zur Vergasung von festen und flüssigen Brennstoffen im Flugstrom mit den Merkmalen des Oberbegriffs des Anspruchs 1.

Die Erfindung bezieht sich auf einen Reaktor zur Flugstromvergasung unterschiedlicher fester und flüssiger Brennstoffe mit einem freien Sauerstoff enthaltenden Oxidationsmittel unter normalem oder erhöhtem Druck bis 8 MPa, Feste Brennstoffe sind dabei zu Staub aufgemahlene Kohlen unterschiedlichen Inkohlungsgrades, Petrolkokse sowie andere mahlbare Feststoffe mit einem Heizwert größer 7 MJ/Nm³. Unter flüssigen Brennstoffen sind Öle oder Öl-Feststoff- oder Wasser-Feststoff-Suspensionen zu verstehen, wie beispielsweise Kohle-Wasser-Slurries. In der Technik der Gaserzeugung aus festen Brennstoffen ist die autotherme Flugstromvergasung langjährig bekannt. Das Verhältnis von Brennstoff zu sauerstoffhaltigen Vergasungsmittel wird dabei so gewählt, dass man Temperaturen erreicht, die über dem Schmelzpunkt der Asche liegen. Dann wird die Asche zu flüssiger Schlacke aufgeschmolzen, die gemeinsam mit dem Vergasungsgas oder getrennt den Vergasungsraum verlässt und anschließend direkt oder indirekt gekühlt wird. Eine solche Vorrichtung geht aus DE 197 181 31 A1 hervor.

Eine ausführliche Beschreibung eines solchen mit einem Kühlschirm ausgerüsteten Vergasungsreaktors findet sich in J. Carl u.a., NOELL-KONVERSIONSVERFAHREN, EF-Verlag für Energie- und Umwelttechnik GmbH 1996, Seiten 32-33. In der darin beschriebenen Konzeption befindet sich ein aus gasdicht verschweißten Kühlrohren bestehender Kühlschirm innerhalb eines Druckgefäßes. Dieser Kühlschirm ist auf einem Zwischenboden abgestützt und kann sich nach oben frei ausdehnen.

Damit wird sichergestellt, dass beim Auftreten verschiedener Temperaturen auf Grund von An- und Abfahrprozessen und daraus bedingter Längenänderungen keine mechanischen Spannungen auftreten können, die ggf. zu einer Zerstörung führen könnten. Um dies zu erreichen, befindet sich am oberen Ende des Kühlschirmes keine feste Verbindung sondern ein Spalt zwischen dem Kühlschirmkragen und dem Brennerflansch, der eine freie Beweglichkeit sichert. Um ein Hinterströmen des Kühlschirmspaltes bei Druckschwankungen im System von Vergasungsgas zu hindern, wird der Kühlschirmspalt mit einem trockenen, kondensat- und sauerstofffreien Gas gespült. Trotz der Spülung kommt es, wie die Praxis zeigt, zur Hinterströmung mit Vergasungsgas, was zu Korrosion an der Rückseite des Kühlschirmes oder am Druckmantel führt. Dies kann zu Betriebsausfällen bis zur Zerstörung des Kühlschirmes oder des Druckmantels führen.

Aus der EP 0254 830 B1 ist ein Vergasungsreaktor zur Vergasung von feinzerteilten festen Brennstoffen unter erhöhtem Druck bekannt, der eine Rohrwandkonstruktion und einen diese umhüllenden Druckmantel aufweist. Das heiße Vergasungsgas verlässt den Verbrennungsraum kopfseitig über einen Auslass, der mittels Kühlkreislauf gekühlt ist. Ein Kompensator bewirkt zum einen eine gas- bzw. wasserdichte Trennung zwischen Verbrennungsraum sowie dem wassergefüllten Raum zwischen Rohrwandkonstruktion und Druckmantel und zum anderen gleicht er Wärmedehnungen zwischen Rohrwandkonstruktion und Druckmantel aus. Der Temperatur-empfindliche Kompensator muss also innen durch den mittels Kühlkreislauf gekühlten Auslass für das heiße Vergasungsgas und außen durch den wassergefüllten Raum zwischen Rohrwandkonstruktion und Druckmantel vor thermischer Überlastung geschützt werden.

Aufgabe der vorliegenden Erfindung ist die Vermeidung der genannten Nachteile.

Erfindungsgemäß wird die Aufgabe durch die in Anspruch 1 genannte Lösung gelöst.

Erfindungsgemäß wird eine feste Verbindung des Kühlschirmes mit dem Druckmantel bzw. dem oberen Reaktorflansch vorgeschlagen, die eine dauernde Gasspülung erübrigt und das Hinterströmen durch Vergasungsgas verhindert. Die feste Verbindung zwischen Kühlschirm und Druckmantel ist gasdicht und lässt Verschiebungen zwischen Kühlschirm und Druckmantel in Richtung der Zentralachse des Reaktors zu.

Weiterhin ist der Reaktor gemäß Anspruch 1 ausgestaltet.

In weiterer Ausgestaltung werden technischen Maßnahmen zum Druckregime zwischen dem Vergasungsraum und dem Kühlschirmspalt dargestellt.

Die Erfindung wird im Folgenden als Ausführungsbeispiel in einem zum Verständnis erforderlichen Umfang anhand einer Figur erläutert. Dabei zeigt:

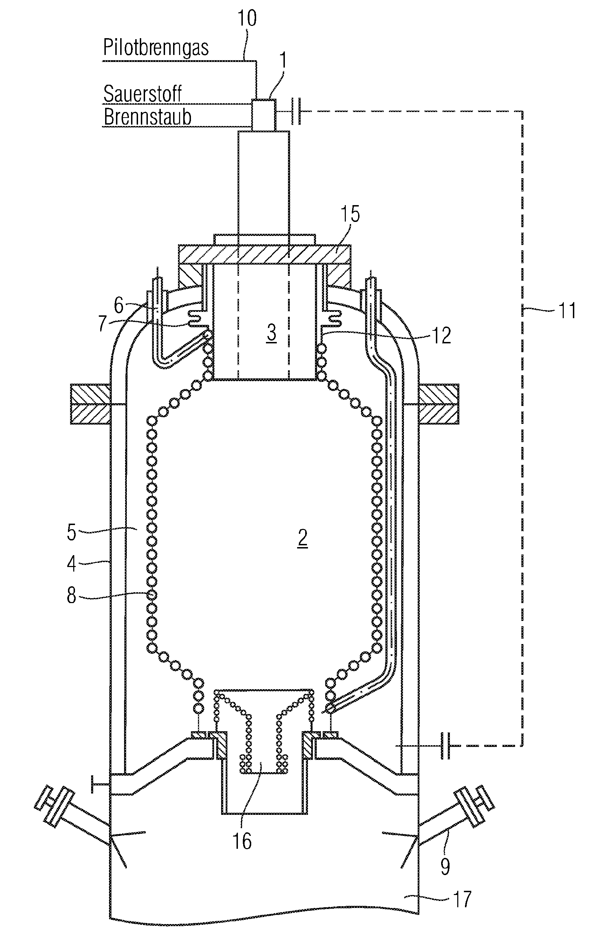

## Patentansprüche

1. Reaktor zur Vergasung von festen und flüssigen Brennstoffen im Flugstrom bei Temperaturen zwischen 1.200 und 1.900°C und Drucken zwischen Umgebungsdruck und 10 MPa (100 bar), wobei feste Brennstoffe staubfein aufgemahlene Kohlen unterschiedlichen Inkohlungsgrades, Petrolkokse oder andere feste kohlenstoffhaltige Stoffe sind und flüssige Brennstoffe, Öle oder Öl-Feststoff- oder Wasser-Feststoff-Suspensionen sein können mit einem freien Sauerstoff enthaltenden Oxidationsmittel, wobei der Reaktor einen Kühlschirm (8) und einen Druckmantel (4) aufweist,
der Kühlschirm über einen Wellrohrkompensator (7) mit dem Druckmantel zur Aufnahme von Längenänderungen in Richtung der Zentralachse des Reaktors gasdicht verbunden ist,
**dadurch gekennzeichnet, dass**
i) der Ringspalt (5) zwischen Druckmantel und Kühlschirm über ein äusseres Gasnetz mit Gas beaufschlagbar ist
- oder -
ii) der Ringspalt (5) zwischen Druckmantel und Kühlschirm über eine Verbindung mit dem Druck des Pilotbrennersgases beaufschlagbar ist
und der Wellrohrkompensator die Brennervorrichtung (3) konzentrisch umschließt.

2. Reaktor nach Anspruch 1,
**dadurch gekennzeichnet, dass**
im Ringspalt (5) zwischen dem Druckmantel und dem Kühlschirm ein Überdruck gegenüber dem Vergasungsraum aufbaubar ist.

## Claims

1. Reactor for the gasification of solid and liquid fuels in the entrained-flow at temperatures between 1200 and 1900 °C and pressures between ambient pressure and 10 MPa (100 bar), it being possible for solid fuels to be finely-pulverised coals of differing ranks, petrol cokes or other solid carbonaceous materials and liquid fuels, oils or oil-solids or water-solid suspensions with an oxidising agent containing free oxygen, the reactor having a cooling screen (8) and a pressure shell (4),
the cooling screen is connected in a gas-tight manner to the pressure shell via a bellows compensator (7) to accommodate linear deformations in the direction of the central axis of the reactor,
**characterised in that**
i) gas can be applied to the annular gap (5) between pressure shell and cooling screen via an external gas supply - or -
ii) the annular gap (5) between pressure shell and cooling screen can be pressurised at the pressure of the pilot burner gas via a connection
and the bellows compensator encloses the burner (3) in a concentric manner.

2. Reactor according to claim 1,
**characterised in that**
an overpressure with respect to the gasification chamber can be established in the annular gap (5) between the pressure shell and the cooling screen.

## Revendications

1. Réacteur destiné à la gazéification de combustibles solides et liquides en flux entraîné à des températures comprises entre 1.200 et 1.900°C et des pressions comprises entre la pression ambiante et 10 MPa (100 bar), les combustibles solides étant des charbons broyés en poudre fine à taux de carbonisation variable, des cokes de pétrole ou d'autres matières carbonées solides, et les combustibles liquides pouvant être des huiles ou des suspensions huile-solide ou eau-solide avec un oxydant contenant de l'oxygène libre, le réacteur présentant un écran refroidissant (8) et une chemise pressurisée (4), l'écran refroidissant étant relié de manière étanche au gaz à la chemise pressurisée, par l'intermédiaire d'un compensateur à tube ondulé (7), pour absorber des variations de longueur en direction de l'axe central du réacteur,
**caractérisé en ce que**
i) l'interstice annulaire (5) entre la chemise pressurisée et l'écran refroidissant peut être alimenté en gaz à travers un réseau de gaz extérieur,
ou
ii) l'interstice annulaire (5) entre la chemise pressurisée et l'écran refroidissant peut se voir appliquer la pression du gaz du brûleur pilote à travers une liaison,
et
le compensateur à tube ondulé entoure concentriquement le dispositif de brûleur (3).

2. Réacteur selon la revendication 1,
**caractérisé en ce que**
une surpression par rapport à la chambre de gazéification peut être établie dans ledit interstice annulaire (5) entre la chemise pressurisée et l'écran refroidissant.
